# EUROPEAN PATENT APPLICATION

(11) **EP 1 946 648 A1**
(43) Date of publication of application: **23.07.2008**
(21) Application number: 06822280.1
(22) Date of filing: 25.10.2006
(51) Int. Cl.: A23F 5/24

(54) **METHOD FOR PRODUCTION OF COFFEE EXTRACT**

(30) Priority: 27.10.2005 JP 2005313294
(71) Applicant: Inabata Koryo Co., Ltd., Osaka-shi, Osaka 532-0027 (JP); The Coca-Cola Company, Atlanta, GA 30313 (US)
(72) Inventor: SHINKAWA, Sigeo, Yokohama-shi, Kanagawa 221-0802 (JP); OHKURA, Osamu, Osaka-shi, Osaka 532-0027 (JP); KANEKO, Ryousuke, Osaka-shi, Osaka 532-0027 (JP); YOSHIOKA, Yuri, Osaka-shi, Osaka 532-0027 (JP); MATSUMURA, Shinichi, Osaka-shi, Osaka 532-0027 (JP)
(74) Representative: Towler, Philip Dean
(86) International application number: PCT/JP2006/321303
(87) International publication number: WO 2007/049660

(57) **Abstract**

[PROBLEMS] The present invention aims to provide a process for extracting coffee extract, in which excellent flavor, aroma, taste are contained even after the sterilization process.

[MEANS FOR SOLVING PROBLEMS] A process for extracting coffee beans comprising following steps: Step 1: soaking or wetting coffee beans with hot water, wherein the coffee beans are roasted and ground, Step 2: steam-distilling the coffee beans of Step 1 to recover distilled liquid, Step 3: extracting distilled residue of the Step 2 with hot water to recover extracted liquid, and Step 4: mixing the distilled liquid of the Step 2 with the extracted liquid of the Step 3 to obtain coffee extract.

## Description

### [Technical Field of the Invention]

The present invention relates to a process for extracting coffee beans wherein its resulting coffee extract maintains excellent aroma, flavor, and taste even after the sterilization process.

### [Background Art]

The most important qualities of the coffee are its flavor, especially its taste and aroma. Coffee beverage such as canned and bottled coffee are generally produced by at first extracting coffee beans with hot or warm water to obtain coffee extract, and then diluting the coffee extract to a drinkable concentration, then filling a container with the extract to sterilize it.
However, the coffee extract, which is obtained by the conventional extraction process through hot or warm water, does not substantially contain coffee flavor in coffee beans. In addition, the sterilization process deteriorates coffee extract's flavor and aroma, which results in dissatisfaction of consumers.

In order to provide coffee extract as coffee beverages, in general, the coffee extract has to be diluted to a drinkable concentration prior to the sterilization process (Patent Publication 1). As a result, the flavor component becomes further diluted.
It is possible to enhance the flavor, when a large quantity of coffee beans is applied for producing the coffee extract. However, in this case, it may also enhance taste components, which intensifies bitter flavor. As a result, it is unsuitable for drinking. Thus it is difficult to enhance the flavor component only while maintaining excellent tastes.
Therefore, there is need for a process of extracting coffee beans, wherein its resulting coffee extract maintains a plenty of excellent flavor and taste components even after the sterilization process.

[Patent Publication 1] Japanese Patent Publication 2000-201622

### [Disclosure of the Invention]

Considering the above-described problems, the present invention aims to provide a process for extracting coffee extract, in which excellent aroma, flavor and taste are contained even after the sterilization process.

### [Summary of the Invention]

The present invention according to claim 1 is characterized in comprising following steps:
Step 1: soaking or wetting coffee beans with hot water, wherein the coffee beans are roasted and ground
Step 2: steam-distilling the coffee beans of Step 1 to collect distilled liquid
Step 3: extracting distilled residue of the Step 2 with hot water to collect extracted liquid
Step 4: mixing the distilled liquid of the Step 2 with the extracted liquid of the Step 3 to obtain coffee extract.

The present invention according to claim 2 is characterized in a process according to claim 1 further comprising: adding agent for adjusting pH and/or ascorbic acid into the coffee extract obtained in the Step 4.
The present invention according to claim 3 is characterized in a process according to claim 2, wherein the agent for adjusting pH is selected from baking soda, sodium acid carbonate, calcium carbonate and sodium acid citrate.
The present invention according to claim 4 is characterized in a process according to any one of claim 1 to 3, wherein all of the Step 1 to 4 are executed under deoxidized condition.
The present invention according to claim 5 is characterized in a process according to claim 4, wherein the deoxidized condition is produced by at least one of executing under inert gas atmosphere, blowing inert gas or replacing with inert gases.
The present invention according to claim 6 is characterized in a process according to claim 5, wherein the inert gas is at least one selected from a group consisting of nitrogen, carbon dioxide, argon gas and helium.
The present invention according to claim 7 is characterized in a process according to any one of claim 1 to 6, wherein the hot water includes anti-oxidant.
The present invention according to claim 8 is characterized in a process according to claim 7, wherein the anti-oxidant is at least one selected from a group consisting of sodium ascorbate, sodium sulfite, sodium hyposulfite, sulfur dioxide, sulfurous acid anhydride, potassium sulfite, potassium pyrosulfite, ascorbic acid, erythorbate acid, sodium erythorbate, rosemary extract, lonicera japonica extract, raw coffee bean extract, and mate extract.

### [Effect of the Invention]

A process for extracting coffee beans according to the present invention comprises by at first wetting roasted coffee beans, and then steam-distilling the coffee beans to obtain a predetermined amount of distilled liquid and extracting distilled residue with hot water to obtain extracted liquid, and finally mixing the distilled liquid with the extracted liquid. Therefore the coffee extract extracted by the present invention can keep fine aroma, flavor and taste even after the sterilization process.

### [Detailed Description of the Invention]

In the process for extracting coffee beans according to the present invention, coffee beans are firstly roasted and ground, and are soaked or wet with hot water. Then, the coffee beans are steam distilled, so that distilled liquid is obtained in a given amount. The distilled residue is extracted with hot water to obtain extracted liquid, and then the extracted liquid is collected.

Therefore, a process for extracting coffee beans comprises following steps:
Step 1: soaking or wetting coffee beans with hot water, wherein the coffee beans are roasted and ground.
Step 2: steam-distilling the coffee beans that are soaked by Step 1 to collect distilled liquid
Step 3: extracting distilled residue of the Step 2 with hot water to collect extracted liquid
Step 4: mixing the distilled liquid of the Step 2 with the extracted liquid of the Step 3.
   Thus, by extracting the coffee beans through the above-mentioned Step 1 to Step 4 in order, the coffee extract keeps fine aroma, flavor, and taste even after the sterilization process. In addition, the coffee extract remains a drinkable concentration. Therefore, it is possible to directly apply the coffee extract as coffee beverage after sterilization without diluting.

In the present invention, a process for extracting coffee beans begins with the process of soaking or wetting coffee beans (roasted) (Step 1) with hot water. Step 1 is conducted before steam-distilling the coffee beans (Step 2) and extracting distilled residue with hot water (Step 3).

In order to sufficiently extract aroma components in coffee beans, the coffee beans should be stream-distilled through Step 2, before extracting distilled residue with hot water (Step 3). In this case, when stream distilled, the coffee beans are to be subjected to high temperatures for a long time, which deteriorates taste components extracted with hot water. Therefore, it is impossible to obtain coffee extract with fine flavor.
Hence, in the present invention, the inventors found that Step 1 prevents deterioration in taste components, even if roasted coffee beans were subjected to high temperatures for a long time in the steam-distilling process. Thus, the inventors completed a process for extracting coffee beans by proceeding Step 1, and the following Step 2 to Step 4.
As a result, the process inhibits to deteriorate the taste components, even when coffee beans are subjected to high temperatures. Therefore, it is possible to obtain coffee extract with fine aroma, flavor, and taste even after the sterilization process.
Hereinafter, Steps 1 to 4 will be described in sequence.

The roasted coffee beans used in the present invention can either be ground or not. Coffee beans used in this invention is not specified, but can include Coffea Arabica, Coffea robusta, Coffea liberica and so forth. Furthermore, it is possible to use 2 kinds or more of the coffee materials.

In Step 1, the hot water temperature is preferably ranged between 5°C and 100°C, but not limited to it. When the temperature is less than 5°C, it is difficult to wet coffee beans. When the temperature exceeds 100°C, the coffee extract may be deteriorated in its quality. Thus, it is not preferable to deviate from the temperature range.

It is preferable to wet the roasted coffee beans with hot water between 1 and 30 minutes, but the wet time duration is not limited to it. When the wet time is less than 1 minute, it is not enough to wet all coffee beans evenly. When the wet time exceeds 30 minutes, the quality deterioration will start. Therefore, it is not preferable to deviate from the wet time range.

It is preferable to soak the coffee beans in hot water in the quantity of 0.05 to 3 times per weight of roasted, ground coffee beans, but the water quantity is not limited to it. When the quantity is less than 0.05 times per weight of coffee beans, it is not enough to wet all coffee beans evenly. When the quantity exceeds 3 times per weight of coffee beans, a container is filled with liquid so that no airspace is provided in the container for water vaporization. Thus, this condition is not good for steam-distilling (Step 2).

Step 2 is explained as below. Step 2 is a process of steam distilling coffee beans which is soaked or wetted through Step 1, to collect distilled liquid.

In order to obtain flavorful coffee extract, it is necessary to extract aroma components in coffee beans. The aroma components are obtained by steam-distilling coffee beans. Thus, aroma components, which cannot be extracted through Step 3 (including hot water-extraction), can be surely extracted by steam distilling.
Furthermore, in the present invention, the coffee extract is produced by using steam-distilled liquid. Therefore, the coffee extract keeps fine aroma, flavor, and taste even after the sterilization process.
Hence, considering the above descriptions, it is essential to conduct Step 2 (including steain-distillation) in order to extract flavorful coffee extract.

It is necessary to conduct Step 2 in the process for extracting Coffee beans in the present invention. However, when the Step 1 is not conducted prior to Step 2, less flavor is provided in coffee extracted liquid obtained in the Step 3 due to high temperature of hot water.

As mentioned above, Step 1 is conducted to steam-distill the coffee beans, and then Step 2 is conducted to collect the distilled liquid. Conducting these Steps, the excellent aroma components in coffee beans are contained in the distilled liquid abundantly. In addition, conducting Step 3, the extracted liquid is obtained, in which the excellent taste components are contained abundantly. Therefore, in Step 4, coffee extract is obtained by mixing the distilled liquid of Step 2 with the extracted liquid of Step 3, and the obtained coffee extract contains the excellent aroma components abundantly as well as the excellent taste.
When the coffee beans are stream-distilled, they are subjected to high temperatures for a long time, which deteriorates the taste components. However, by conducting Step 1, the taste components may be prevented from their deterioration.

When the Coffea arabica beans are used as the materials for the coffee beans, the distilled liquid collected by Step 2 includes a plenty of furane and its derivative, chemical components with an aldehyde group, and chemical components with a ketone group, as aroma components.
These aroma components are contained in coffee extract obtained by a conventional way of extracting coffee beans (i.e. extracting with hot or warm water). However, coffee extract extracted by the present invention contains more aroma components than conventional one.

Now referring to Step 3, Step 3 is a process of extracting distilled residue of the Step 2 with hot water to collect coffee extract.

By extracting coffee beans with hot water, taste components in coffee beans are extracted.
It is preferable that a temperature of hot water for extraction is 50°C ~100°C, more preferably 80°C ~95°C, but not limited to it. If the temperature is less than 50°C, the extraction efficiency for the taste components will be decreased. If the temperature exceeds 100°C, the quality may be deteriorated. Therefore, it is not preferable to deviate from the temperature range.

An amount of hot water and the time for extraction with hot water are not particularly limited, and these conditions may be determined according to types of coffee beans.
Regarding Coffea arabica beans; taste components can be completely extracted by extracting the coffee beans with hot water (85°C-95°C) of about 2.5 times of the material, and the extraction is conducted about 15 minutes:

Regarding Step 4, the liquid distilled with steam and the liquid extracted with hot water are mixed in order to obtain the coffee extract.

Thus, such the coffee extract contains taste components in the extracted liquid as well as aroma components in the distilled liquid. Therefore, the coffee extract of the present invention can keep fine aroma, flavor, and taste even after the sterilization process.

In the present invention, it is also possible to further add agent for adjusting pH and/or vitamin C into the coffee extract (i.e. coffee extract of Step 4), which is obtained by mixing the liquid extracted with hot water and the liquid distilled with steam. These components (agent for adjusting pH and/or vitamin C) are added for retaining coffee extract's flavor.
An example of the agent for adjusting pH includes one selected from baking soda, sodium acid carbonate, calcium carbonate and sodium acid citrate, but not limited to them.
In the case of using the agent for adjusting pH and/or vitamin C, the blending quantity is not limited. However, it is preferable to add in total around 200~400 ppm of the agent for adjusting pH and vitamin C to the coffee extract.
In addition, in the case of adding both the agent for adjusting pH and vitamin C, it is preferable to add them so that pH may be 6.0~7.0.

It is preferable that the process for extracting the coffee beans in the present invention is executed under the deoxidized condition through all of Step 1 to Step 4.
Thus, the coffee extract obtained under the deoxidized condition not only prevents its flavor and aroma from being deteriorated (increase in unpleasant bitterness) even after high-pressure process, but also enhances pleasant flavor and aroma (pleasant bitterness). In addition, the process prevents precipitation and aggregation as well as coffee oil from floating. As a result, it distinctly maintains a clear appearance condition, and it is especially effective when filled in a transparent bottle such as PET bottle.

The term "deoxidized condition" here broadly includes conditions that are: the condition of which the atmosphere is filled with inert gases, the condition of which the inert gases are blown, the condition of which the inert gases are displaced, and the condition of which headspace in a container is deoxidized.
Inert gas is at least one selected from a group consisting of carbon dioxide, nitrogen gas, argon gas and helium.

The coffee extract extracted under atmosphere of inert gases by the process according to the present invention is prevented from oxidation and deterioration. This effect can be kept under the high pressure process. The high pressure process alone cannot prevent oxidation and deterioration in coffee beverages while stored. However, extraction under the deoxidized atmosphere prevents deterioration and oxidation while stored, and provides excellent flavor.

Furthermore, in the entire steps of extracting coffee beans according to the present invention, anti-oxidant may be added to the hot water, which is used as processing water, to prevent the obtained coffee extract from being oxidized and deteriorated.
Examples of the anti-oxidant include sodium ascorbate, sodium sulfite, sodium hyposulfite, sulfur dioxide, sulfurous acid anhydride, potassium sulfite, potassium pyrosulfite, ascorbic acid, erythorbate acid, sodium erythorbate, rosemary extract, lonicera japonica extract, raw coffee bean extract, and mate extract.

The coffee extract obtained by the above process can be directly provided as coffee beverages. In addition, the coffee extract can be accordingly used after dilution depending on applications.

### [Embodiments]

Hereinafter the process for extracting the coffee beans according to the present invention is clearly explained with embodiment and comparison, however the present invention will not be limited to the explanation below.

### Embodiment 1

At first, 400 g of coffee beans (Guatemala Coffee Beans: 100%) (roasted and ground) were placed in a vessel, and wetted with 100 g of hot water at 40°C for 10 minutes. The temperature of the hot water was kept at 40°C so that every coffee bean can be evenly wetted.
Then the wetted coffee beans were steam-distilled in a vessel, and 80 g of distilled liquid was collected.
Extracted liquid was extracted by pouring 3,600 g of hot water at 95°C in the distilled residue and by filtering the dripped hot water.
After that, 80 g of the distilled liquid and 2,800 g of the extracted liquid were mixed.
Thus, 2,880 g of coffee extract was obtained, and used as a sample of the embodiment 1.

### Embodiment 2

A sample of the embodiment 2 was prepared by adding 1 g of baking soda to 1,000 g of the sample of the embodiment 1 to adjust to pH 6.0.
The coffee extract in 1,001 g weight is used as a sample of the embodiment 2.

### Embodiment 3

A sample of the embodiment 3 was prepared through the same process.of the embodiment 1, but Step 1 to 4 was conducted under nitrogen atmosphere and deoxidized hot water was used for distillation and extraction.
The deoxidized hot water was obtained with ultrasonic.

### Embodiment 4

A sample of the embodiment 4 was prepared through the same process of the embodiment 1, but sodium ascorbate was added to the hot water used in Step 1 to 4 so that the concentration of the sodium ascorbate reaches 50 ppm.

### Comparison 1

At first, 400 g of coffee beans (Guatemala Coffee Beans: 100%) (roasted and ground) were placed in a vessel, and 4,000 g of hot water at 95°C was poured to the coffee beans and filtered to obtain 3,000 g of coffee extract, which was used as a sample of Comparison 1.

### Comparison 2

A sample of the comparison 2 was prepared by steam-distilling 400 g of coffee beans (Guatemala Coffee Beans 100%)(roasted and ground) in the vessel to collect 80 g of distilled liquid.
After that, 3,600 g of hot water at 95°C was poured to the distilled residue and filtered to obtain extracted liquid.
The distilled liquid (80 g) and extracted liquid (2,800 g) were mixed, and the mixture (2,880 g) was used as sample of Comparison 2.

### Comparison 3

A sample of the comparison 3 was prepared by pouring 3,600 g of hot water at 95°C to 400 g of coffee beans (Guatemala Coffee Beans: 100%) (roasted and ground) and filtering them to obtain extracted liquid.
The extracted residue was subjected to steam distilling to recover 200 g of distilled liquid.
The extracted liquid (2,800 g) and the distilled liquid (200 g) were mixed, and the mixture (3,000 g) was used as a sample of Comparison 3.

The coffee extract, which was obtained through the aforesaid embodiments 1 to 4 and comparative examples 1 to 3, was diluted to be Bx. 1.3 with adding baking soda to adjust the coffee extract's pH 6.3. Afterward, 190g of the coffee extract was packed per can. Then, 10 panelists drank each extract sterilized at 115°C for 20 minutes, and evaluated the flavor strength, preferences of the flavor, and taste with the following criteria.

**[Flavor (strength)]**

| | | | | |
|---|---|---|---|---|
| Very strong 5 | Strong 4 | Average 3 | Weak 2 | Very weak 1 |

**[Flavor (preferences)]**

| | | | | |
|---|---|---|---|---|
| Very good 5 | Good 4 | Average 3 | Poor 2 | Very poor 1 |

**[Taste]**

| | | | | |
|---|---|---|---|---|
| Very good 5 | Good 4 | Average 3 | Poor 2 | Very poor 1 I |

The Sum total for 10 panelists is described in Table 1.

**<Table 1>**

| | | Flavor (strength) | Flavor (preferences) | Tastes |
|---|---|---|---|---|
| Embodiments | 1 | 43 | 42 | 42 |
| | 2 | 39 | 40 | 43 |
| | 3 | 49 | 47 | 46 |
| | 4 | 45 | 44 | 42 |
| Comparative Examples | 1 | 28 | 29 | 32 |
| | 2 | 40 | 38 | 33 |
| | 3 | 33 | 36 | 35 |

As shown in Table 1, the coffee extract, which was extracted by mixing the distilled liquid obtained through steam-distillation after wetting the coffee beans and the extracted liquid obtained by drip-extracting distilled residue, kept fine aroma, flavor, and taste even after the sterilization process, which corresponded to the extract in embodiments 1 to 4.
In response, the coffee extract of Comparison 1, which was extracted by the extracted liquid with drip extracting, was inferior to the coffee extract in aroma, flavor, and taste.
In addition, the coffee extract of Comparison 2, which was extracted by recovering the distilled liquid without wetting coffee beans and by mixing the extracted liquid with drip-extracting, had the excellent flavor and preferability. However, such the coffee extract had bad tastes. Likewise, the coffee extract of Comparison 3, which was extracted by increasing an amount of recovering the distilled liquid and by mixing the extracted liquid with drip-extracting, had the excellent flavor and preferability, but did not have good tastes.
Therefore, by extracting coffee beans by wetting, steam-distilling, and drip-extracting, resulting coffee extract has fine aroma, flavor, and better taste.

## Claims

1. A process for extracting coffee beans comprising following steps:
Step 1: soaking or wetting coffee beans with hot water, wherein the coffee beans are roasted and ground
Step 2: steam-distilling the coffee beans of Step 1 to collect distilled liquid
Step 3: extracting distilled residue of the Step 2 with hot water to collect extracted liquid
Step 4: mixing the distilled liquid of the Step 2 with the extracted liquid of the Step 3 to obtain coffee extract.

2. The process for extracting coffee beans according to claim 1 further comprising:
adding agent for adjusting pH and/or ascorbic acid into the coffee extract obtained in the Step 4.

3. The process for extracting coffee beans according to claim 2, wherein the agent for adjusting pH is at least one selected from baking soda, sodium acid carbonate, calcium carbonate and sodium acid citrate.

4. The process for extracting coffee beans according to any one of claim 1 to 3, wherein all of the Step 1 to 4 are conducted under deoxidized condition.

5. The process for extracting coffee beans according to claim 4, wherein the deoxidized condition is produced by at least any one of executing under inert gas atmosphere, blowing inert gas or replacing with inert gas.

6. The process for extracting coffee beans according to claim 5, wherein the inert gas is at least one selected from a group consisting of nitrogen, carbon dioxide, argon gas and helium.

7. The process for extracting coffee beans according to any one of claim 1 to 6, wherein the hot water includes anti oxidant.

8. The process for extracting coffee beans according to claim 7, wherein the anti-oxidant is at least one selected from a group consisting of sodium ascorbate, sodium sulfite, sodium hyposulfite, sulfur dioxide, sulfurous acid anhydride, potassium sulfite, potassium pyrosulfite, ascorbic acid, erythorbate acid, sodium erythorbate, rosemary extract, lonicera japonica extract, raw coffee bean extract, and mate extract.
